# EUROPEAN PATENT APPLICATION

(11) **EP 1 998 275 A1**
(43) Date of publication of application: **03.12.2008**
(21) Application number: 07008864.6
(22) Date of filing: 02.05.2007
(51) Int. Cl.: G06K 19/07

(54) **Card structure**

(71) Applicant: Power Digital Card Co., Ltd., Banchiau City T'ai pei 220 (TW); Chen Chien-Yuan, Banchiau City Taipei 220 (TW)
(72) Inventor: Chen, Chien-Yuan, Banchiau City Taipei (TW)
(74) Representative: Becker Kurig Straus

(57) **Abstract**

The present invention provides a new card structure, in which a card (1) combines memory card specifications and the external form of a Universal Serial Bus (USB), and a detachable assembled cut-out piece (2) is disposed at one end of the card provided with the Universal Serial Bus (USB). The detachable cut-out piece can be temporarily removed or stacked onto and embedded on the Universal Serial Bus (USB) portion of the card body, thereby adapting the card to comply with USB port specifications for insertion therein, thereby forming a memory card integrated with a memory card and USB dual interface. Moreover, the present invention combines and makes use of the distinguishing features of thermoplastic and thermosetting materials in the manufacturing process of the card to positively improve smooth sliding assembly and disassembly of the cut-out piece, and improve product quality, durability and operational life.

## Description

### BACKGROUND OF THE INVENTION

### (a) Field of the Invention

The present invention relates to a new card structure, and more particularly to design and manufacturing process of a memory card structure that provides data storage and access.

### (b) Description of the Prior Art

In the wake of ever increasing technological development, related electronic information products, including multimedia products such as personal computers, MP3s (potable MP3 (MPEG-1 Audio Layer 3 audio coding standard) players), digital cameras/video cameras, and so on, have become extremely popular, which has been accompanied by a corresponding gradual increase in digital storage device needs of the consumer using these multimedia products. However, different storage devices having different specifications and dimensions are needed for use with different products.

Digital storage devices, including memory cards, flash drives, and so on, have already become personal items carried by many computer users, compared to a diskette, size of a memory card and flash drive is small, capacity is substantially greater than that of a diskette, and access speed is faster. In addition, unlike the memory card and flash drive storage devices, the diskette is easily affected with damp or damaged. Moreover, the memory card and flash drive storage devices enable rapid access and writing, hence, they have already become indispensable accessories for computers and computer peripheral products.

Regarding flash drives, a Universal Serial Bus (USB) is used as the transmission interface, and because a general computer and its peripherals are already equipped with the current Universal Serial Bus (USB), and the plug and play capabilities of USB enables actuation of the flash drive without the need for installation of drivers in the majority of operating systems. Such a configurational design not only enables easy installation for use thereof, moreover, it provides a user with rapid and simple operation and low price,

On the contrary, regarding memory cards, because each type of digital peripheral product is limited for use with memory cards having certain specific specifications, thus, memory cards are usually manufactured in various types of different shape or specifications (such as: Smart Media Card, Secure Digital Card, Multi Media Card, Memory Stick Card, CF Card XD Card, and so on,) for application in various types of models and brands of digital devices, such as cameras, handheld players, MP3s, PDAs (personal digital assistants), cellular phones, and so on. Specifications and dimensions of each type of memory card are not only different, moreover, each type of memory card is only applicable for use with a corresponding connector; thus, feasibility of substitution between the various types of memory card is low. Hence, the consumer must not only purchase many different types of memory cards, but also, it frequently happens that specifications do not correspond after purchase.

Accordingly, some operators provide a data access storage device simultaneously configured with a Universal Serial Bus (USB) and a memory card interface (specifications of the memory card interface complies with specifications of Secure Digital Card, Multi Media Card, CF Card, and so on). Although such a structure is able to achieve dual interface data transmission, however, the shortcomings listed below still require improvement:
1. Manufacturing method of a memory card includes first configuring a chip module (comprising flash memory, control chips, passive components, and so on,) to a base, and then connecting input/output contact terminals used for connecting to a front end of the base, thereby forming the required circuit, and finally, supersonic fusion or methods such as co-extrusion, spot gluing, and so on, are used to bond a cover to the base. If thermosetting resin is used, although production is fast, however, because of the excessive hardness of the material, thus, the memory card cannot be provided with the appropriate flexible bending ability, and excessive pressure on the memory card easily results in fragmentation thereof.
2. Because thickness of a memory card is different from that of a Universal Serial Bus (USB), thus, external form of the memory card results in a difference in height with that of the USB and an uneven appearance, which easily hooks onto conductive terminals interior of a card connector when inserted therein, resulting in deforming the internal terminals, and seriously affecting precision and stability of the inserted card conductive connection.

In light of the shortcomings of the aforementioned prior art structure, the inventor of the present invention, having accumulated years of experience in related arts, attentively and circumspectly carried out extensive study and exploration to ultimately design a new improved card structure and manufacturing process as described in the present invention.

### SUMMARY OF THE INVENTION

Accordingly, a primary objective of the present invention is to provide a memory card manufacturing process which enables fast production and improves quality yield.

Another objective of the present invention is to provide a memory card for data access which is not only configured with a dual interface complying with specifications and dimensions of a Universal Serial Bus (USB) and memory card interface, but also eliminates any concern over affecting memory card standard thickness and external form.

In order to achieve the aforementioned objectives, a new card structure of the present invention combines the distinguishing features of thermosetting and thermoplastic to enable fast production and low defective rate of a card having a memory card and USB dual interface, and provides a design configuration that is easy to assemble, does not deform when bent and has non-breakable flexibility. Moreover, the card structure functions in conjunction with a detachable cut-out-piece which can be temporarily removed or stacked onto the card body and embedded on the USB portion of the card body, thereby enabling a card to assume the external form and dimensions of a memory card according to user needs or cater for use with USB connector port specifications.

To enable a further understanding of said objectives and the technological methods of the invention herein, brief description of the drawings is provided below followed by detailed description of the

### preferred embodiments.

### BRIEF DESCRIPTION OF THE DRAWINGS

FIG. 1 shows a structural schematic view of a preferred embodiment according to the present invention.
FIG. 2 shows a schematic view from another angle of the preferred embodiment according to the present invention.
FIG. 3 shows a schematic view depicting combining of the preferred embodiment according to the present invention.
FIG. 4 shows a cross-sectional schematic view of the preferred embodiment according to the present invention.
FIG. 5 shows an assembled elevational view of the preferred embodiment according to the present invention.
FIGS. 6~7 show schematic views depicting steps in using the preferred embodiment according to the present invention.
FIG. 8 shows a structural schematic view of another preferred embodiment according to the present invention.
FIG. 9 shows a flow chart of the preferred embodiment according to the present invention.
FIG. 10 shows a flow chart of the other preferred embodiment according to the present invention.

### DETAILED DESCRIPTION OF THE PREFERRED EMBODIMENTS

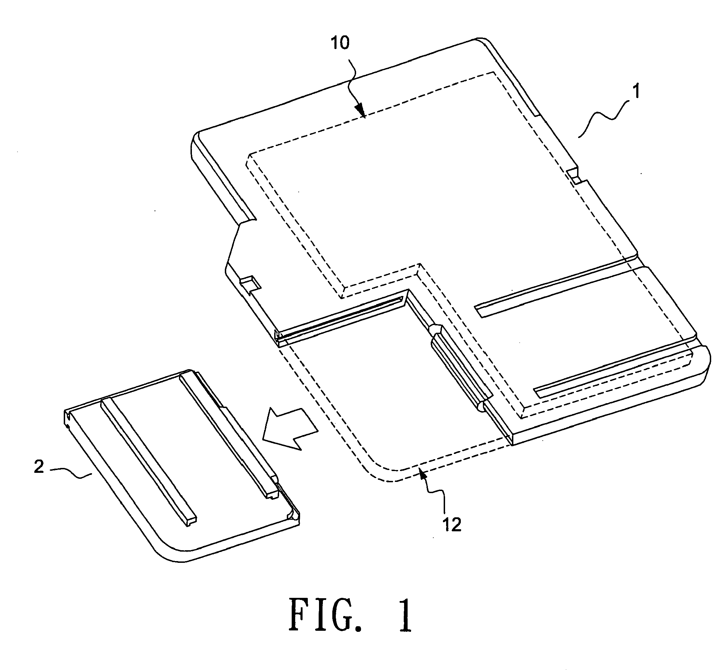

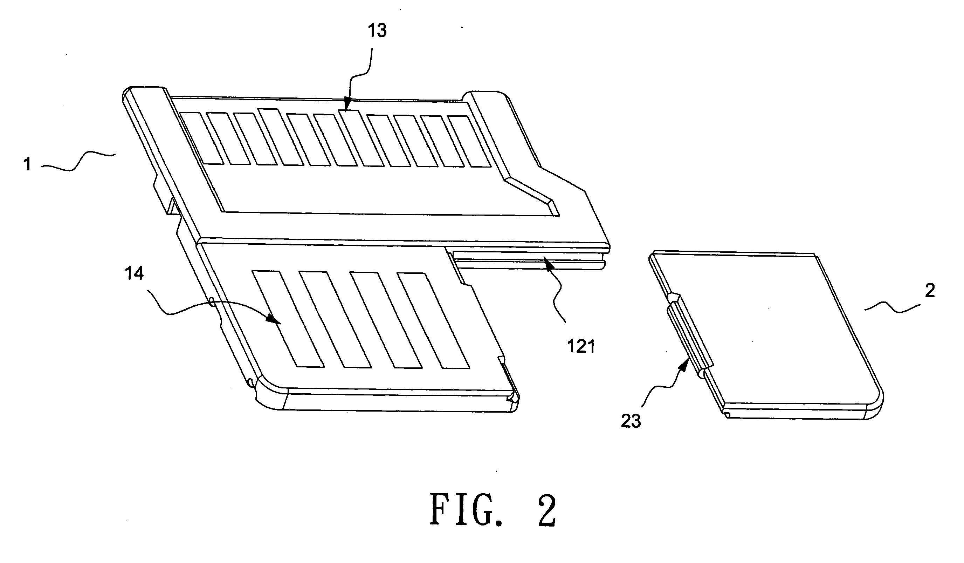

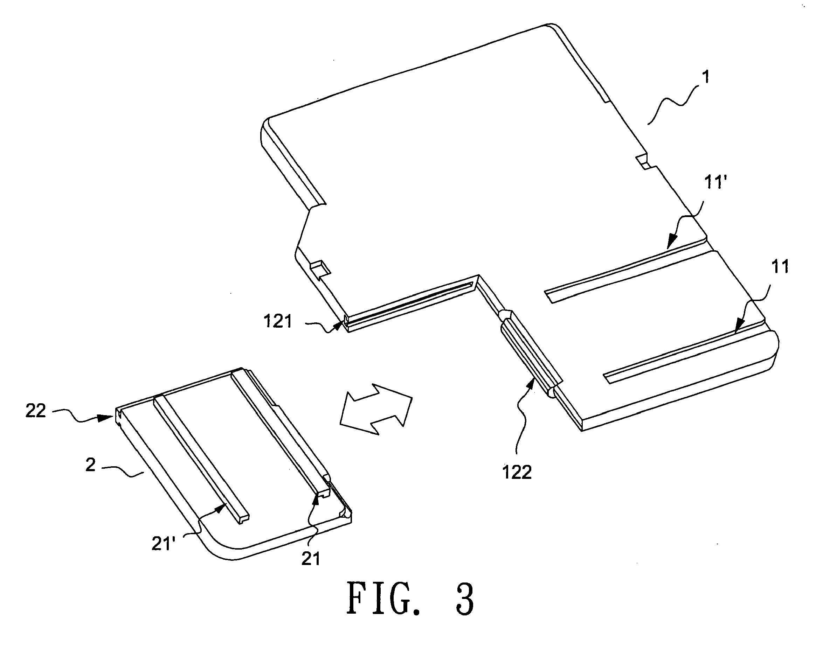

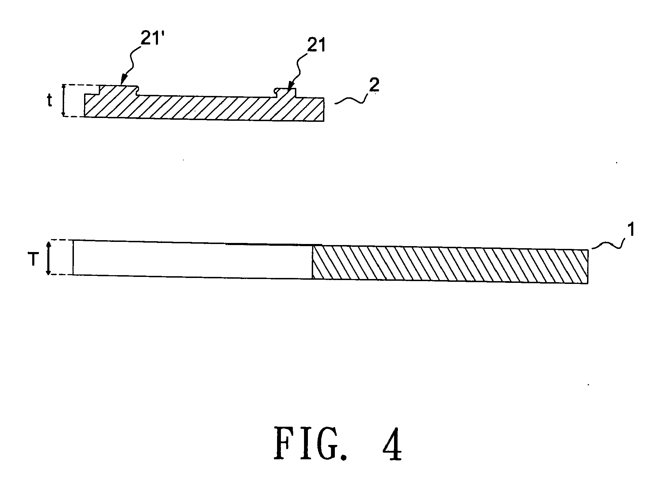

Referring to FIG. 1, which shows a structural schematic view of a preferred embodiment of the present invention, and with reference to the other FIGS. 2 ~ 10, it can be clearly seen that the present invention is structured to comprise a card body 1 and a cut-out piece 2, wherein the card body 1 is manufactured by thermoplastic resin injection encapsulation means, and a chip module 10 is disposed interior thereof. An end of the card body 1 is configured with contact points (I/O, input/output) 13 exposed by the chip module 10 (see FIG. 2), and which comply with memory card specifications. The memory card specifications can be those of small-scale cards including Secure Digital Card, Multi Media Card, MS Pro Card series, XD Card, Mini SD, and so on. A notch 12 is defined at another end of the card body 1, and remaining portion of the end conforms to width dimensions of a Universal Serial Bus (USB), and USB interface contact points (I/O) 14 are formed at an end of the portion. Juxtaposed double concave formed first embedding grooves 11, 11' are transversally defined on another side of the card body 1 in a horizontal direction from an outer edge thereof (see FIGS. 2 and 3). A concave formed second embedding groove 121 and a clasp hook 122 used to clasp and hook the cut-out piece 2 are respectively configured on two side walls of the included angle formed by the notch 12. External form of the cut-out piece 2 corresponds to the outline of the notch 12 of the card body 1, and a convex formed second clasp member 22 and a clasp hook 23 are respectively configured on side walls of the included angle of the cut-out piece 2, thereby enabling mutual butt joining with the concave formed second embedding groove 121 and the clasp hook 122 of the notch 12 of the card body 1 respectively to form the external form and dimensions of a complete memory card. Moreover, double juxtaposed first clasp members 21, 21' are formed on one side of the cut-out piece **2,** which are able to butt join with the first embedding grooves 11, 11' of the card body 1. The double juxtaposed first clasp members 21, 21' and the first embedding grooves 11, 11' are designed with different specifications wherein one is thick and one is thin, or one is thin and one is thick, thereby preventing the user from inserting in an incorrect direction. Moreover, disposition of the double juxtaposed first clasp members 21, 21' is such that the first clasp members 21, 21' are in a common direction, two mutually opposite directions or an equidirectional inward disposition. The embodiment of the present invention uses the equidirectional inward disposition of the first clasp members 21, 21'. Furthermore, total thickness t of the cut-out piece 2 and the first clasp members 21, 21' thereon is not greater than thickness T of the card body 1 (see FIG. 4), thereby ensuring that the cut-out piece 2 does not protrude beyond the level surface of the card body 1 when assembled to the card body 1 to form the complete memory card external form and dimensions, thus preventing the card body 1 from being unable to be inserted into a connector of an electronic device because of such a protrusion beyond the outer surface or causing concern over damaging conductive terminals interior of the connector.

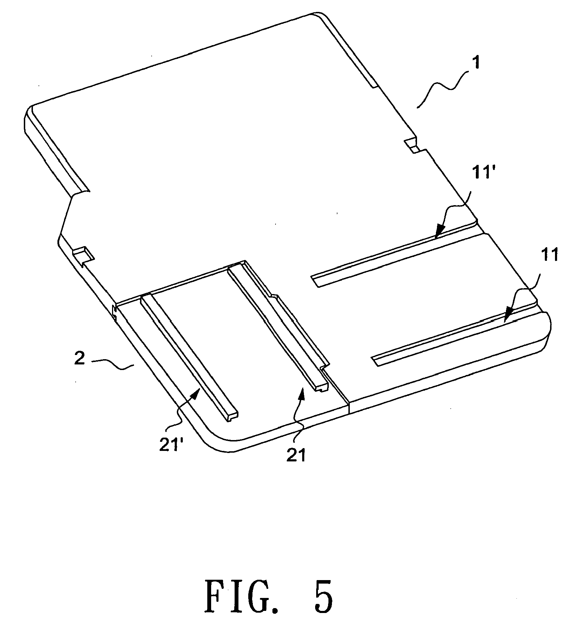

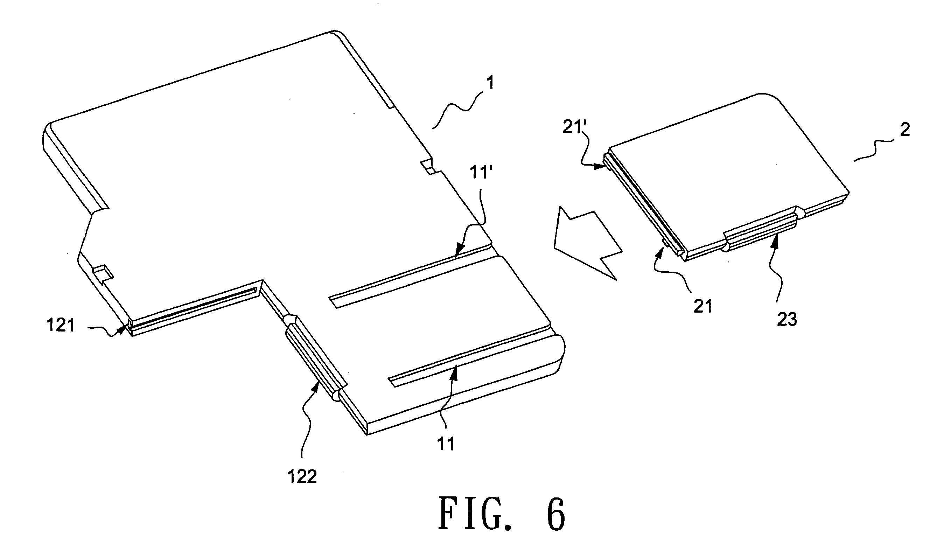

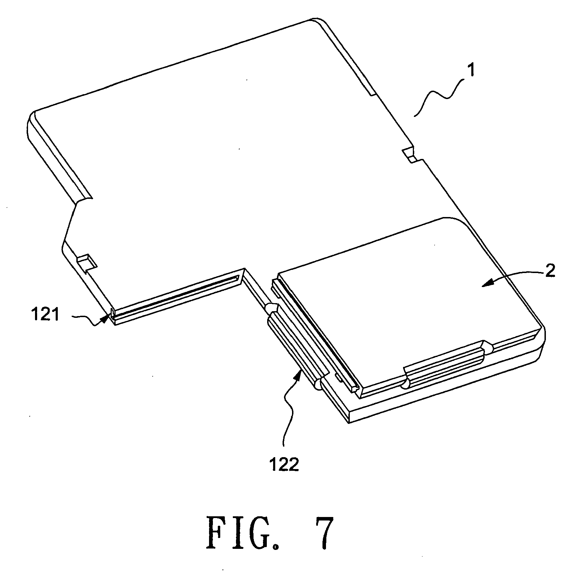

When using the present invention, the card body 1 and the cut-out piece 2 can be joined to form the external form of a complete memory card (see FIG. 5), or after disassembling the cut-out piece 2 from the card body 1 (see FIG. 6), then the first clasp members 21, 21' on the surface of the cut-out piece 2 can be directly disposedly slid into the first embedding grooves 11, 11' of the card body 1 (see FIG. 7), thereby enabling a thin card (such as: Mini SD) to satisfy thickness of a USB connector port, and eliminates concern over worrying about coming away and losing the card. Furthermore, disposition of the first embedding grooves 11, 11' on the card body 1 and the first clasp members 21, 21' on the cut-out piece 2 enable straight and accurate positioning of the cut-out piece 2 and clasping onto the predetermined area of the card body 1. The present invention is provided with foolproof arresting function to avoid being unable to bring about correct effectiveness of a product because of a careless mistake of the user. Of course, if applicable card thickness satisfies thickness specifications of the USB connector port (such as: Secure Digital Card, XD Card, and so on) to be inserted into, then the cut-out piece 2 need only be removed from the card body 1 and directly insert the card body 1 into the USB port for use thereof, without the need to stack and join the cut-out piece 2 to the card body 1. Accordingly, a dual interface card having memory card specifications and USB specifications is completed.

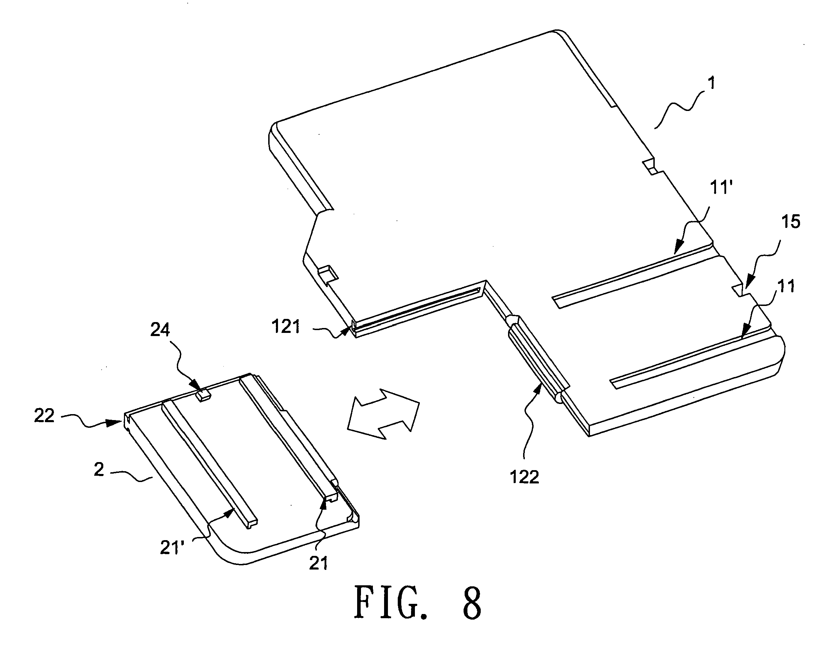

Referring to FIG. 8, which shows a structural schematic view of another preferred embodiment of the present invention, wherein differences between this embodiment and the aforementioned embodiment lie in a groove 15 defined on an edge of the card body 1 and a protruding piece 24 protruding from an appropriate position of the cut-out piece 2, thereby increasing the foolproof arresting function when the cut-out piece 2 is stacked onto the card body 1, and enabling the cut-out piece 2 to accurately clasp into the predetermined area of the card body 1, thus avoiding being unable to bring about correct effectiveness of a product because of a careless mistake of the user. Remaining structures and assembly method of this embodiment are the same as the aforementioned embodiment, and thus not described again.

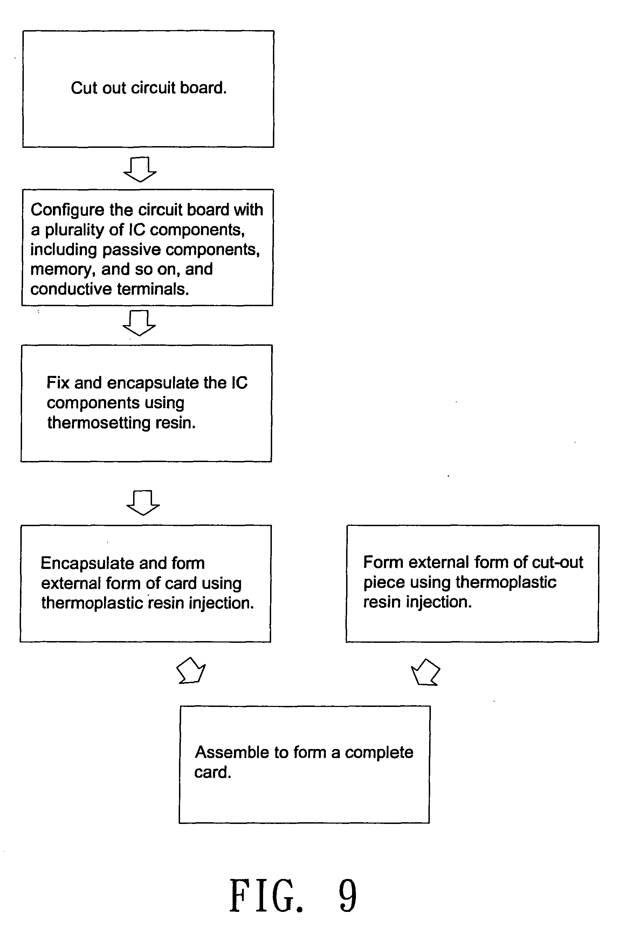

Referring to FIG. 9, which shows a flow chart of the preferred embodiment of the present invention, wherein, in order to maintain smooth sliding assembly and disassembly of the cut-out piece 2, and improve accuracy and product durability of the card body 1, exterior plastic material of the cut-out piece 2 and the card body 1 of the present invention is a thermoplastic flexible material. Referring to the manufacturing process depicted in FIG. 9, a circuit board is first cut to an appropriate size, then a chip module assembled from a plurality of IC (integrated circuit) components, including passive components, flash memory, control chips, and so on, and contact points (I/O) used for signal connection are configured on the circuit board, which are then fixed and encapsulated with thermosetting resin. Because thermosetting resin is used as the encapsulating material, thus, production speed is fast and consistent, and is able to achieve effective encapsulation firmness, and, moreover, improves product yield; then an exterior of the aforementioned thermosetting resin encapsulated chip module is covered with thermoplastic flexible resin (flexible glue material, including TPE (thermoplastic elastomers), TPU (thermoplastic urethanes), TPR (thermoplastic rubbers), and so on) using an injection method, after which only the contact points used for input/output (I/O) data connection are exposed, thereby forming a thermoplastic external form of a card having a memory card and Universal Serial Bus (USB) dual interface, at which time the cut-out piece 2 is directly plastic injection molded from thermoplastic resin material, because the thermoplastic resin outer layer housing is provided with flexibility, thus, the card does not easily fracture when subjected to pressure bending, moreover, is easy to mutually assemble and combine;

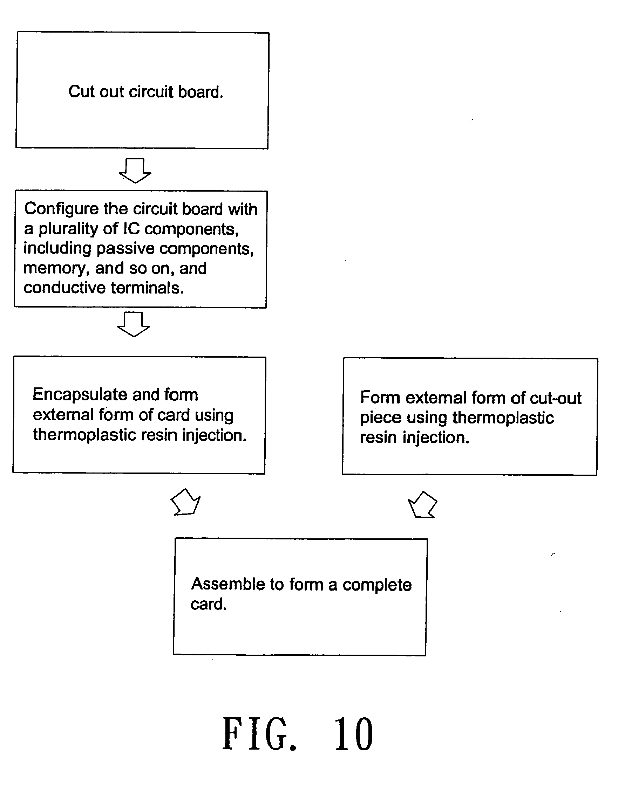

Referring to FIG. 10, which shows the flow chart of the other preferred embodiment of the present invention, wherein difference in the manufacturing process compared to that of the aforementioned process lies in the injection encapsulation and injection molding of the card body 1 external form being implemented directly with thermoplastic resin material, thereby short cutting the thermosetting resin encapsulation step.

From the aforementioned description, it can be known that the present invention fully exploits the distinguishing features of thermosetting and thermoplastic resin injection molding to effectively use thermosetting and thermoplastic manufacturing advantages to manufacture a card, and further improves volume of production and quality. In particular, the distinctive configuration of the present invention benefits related industries. Furthermore, contents of the present invention have not been publicly disclosed prior to this application, and practicability and advancement of the present invention clearly comply with essential elements as required for a new patent application. Accordingly, a new patent application is proposed herein.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A card structure comprising:
a card body 1 manufactured from thermoplastic resin, interior of which is disposed a a chip module 10, one end of the card body 1 is configured with memory card specifications and contact points 13 (I/O (Input/Output)), a notch 12 is defined at another end of the card body 1, and remaining portion of the end conforms to width dimensions of a Universal Serial Bus (USB), and contact points 14 (I/O) are formed at an end of the portion, first embedding grooves 11, 11' are defined on another side of the card body 1, and second embedding grooves 121 are defined on side walls of the notch 12;
a cut-out piece 2 manufactured from thermoplastic resin, external form of which corresponds to the outline of the notch 12 of the card body 1, second clasp members 22 are located on two side walls of the included angle of the cut-out piece 2, which enables mutual butt joining with the second embedding grooves 121 of the notch 12 of the card body 1 to form the external form and dimensions of a complete memory card, moreover, first clasp members 21, 21' are located on a side of the cut-out piece 2, which enable butt joining with and stacking onto the first embedding grooves 11, 11' of the card body 1;
whereby, after detaching the cut-out piece 2 from the card body 1, a choise can be made whether to stack the cut-out piece 2 onto the card body 1 or remove therefrom according to card thickness to satisfy thickness of a USB connector port, thereby achieving a dual interface card provided with memory card specifications and USB specifications.

2. The card structure according to claim 1, wherein the chip module 10 interior of the card body 1 is encapsulated within thermosetting resin, and an exterior is covered with thermoplastic resin to form external form of a card body 1.

3. The card structure according to claim 1, wherein the chip module 10 interior of the card is encapsulated and covered with thermoplastic resin to form external form of the card body 1.

4. The card structure according to claim 1, wherein joining of the first embedding grooves 11, 11' on the side walls of the notch 12 of the card body 1 and the first clasp members 21, 21' on the cut-out piece 2 is a ridge-groove sliding embedding joint.

5. The card structure according to claim 1, wherein a groove 15 and a protruding piece 24 are located on the card body 1 and the cut-out piece 2 respectively, thereby enabling butt joining of the cut-out piece 2 and the card body 1 when stacked together.

6. The card structure according to claim 4, wherein the first clasp members 21, 21' are double juxtaposed and designed with different specifications wherein one is thick and one is thin.

7. The card structure according to claim 6, wherein disposition of the double juxtaposed first clasp members 21, 21' is such that the first clasp members 21, 21' are in a common direction.

8. The card structure according to claim 6, wherein disposition of the double juxtaposed first clasp members 21, 21' is such that the first clasp members 21, 21' are in two mutually opposite directions.

9. The card structure according to claim 6, wherein disposition of the double juxtaposed first clasp members 21, 21' is such that the first clasp members 21, 21' are in an equidirectional inward disposition.
